# EUROPEAN PATENT SPECIFICATION

(11) **EP 2 688 123 B1**
(45) Date of publication and mention of the grant of the patent: **05.07.2017**
(21) Application number: 12176537.4
(22) Date of filing: 16.07.2012
(51) Int. Cl.: H01M 2/14, H01M 2/16, H01M 4/04, H01M 4/62, H01M 4/13, H01M 10/04, H01M 10/0525, H01M 10/058

(54) **Process for manufacturing a Li-ion battery comprising a fluoropolymeric separator**
Verfahren zur Herstellung einer Li-Ion-Batterie mit einem fluorpolymeren Abscheider
Procédé de fabrication d'une batterie au lithium-ion comprenant un séparateur de fluoropolymère

(43) Date of publication of application: 22.01.2014
(73) Proprietor: Commissariat à l'Énergie Atomique et aux Énergies Alternatives, 75015 Paris (FR); SOLVAY SA, 1120 Bruxelles (BE)
(72) Inventor: Rouault, Hélène, 38420 Le Versoud (FR); Abusleme, Julio, 21047 Saronno (VA) (IT); Gloesener, Daniel, 5022 Cognelée (BE); Paillet, Sabrina, 64000 Pau (FR); Picard, Lionel, 38700 Le Sappey en Chartreuse (FR)
(74) Representative: Cabinet Laurent & Charras

(56) References cited:
- EP-A1- 1 621 573
- WO-A1-2008/129041
- US-A1- 2003 059 683
- US-A1- 2003 219 648

## Description

### FIELD OF THE INVENTION

The invention relates to a process for preparing a Li-ion battery comprising a fluoropolymer electrode separator.

The field of the invention concerns mostly the storage and release on demand of electrical energy. This kind of batteries may be typically used in consumer electronics such as portable electronic devices.

### BACKGROUND OF THE INVENTION

Batteries comprise one or more electrochemical units, or cells, which aim at converting stored chemical energy into electrical energy.

Each electrochemical cell of a lithium ion (Li ion) battery mostly consists of a positive electrode (cathode), an electrode separator, and a negative electrode (anode). Each electrode can be supported by a current collector that electronically isolates the positive and negative electrodes from each other.

In these lithium ion batteries, the active material of the cathode comprises a lithium compound such as a lithium oxide. On the other hand, the active material of the anode may be a carbonaceous material such as graphite. These batteries differ from regular lithium batteries essentially in that the electrode material is not metallic lithium.

The active materials of the electrode allow inserting and de-inserting lithium cations. The composition of the electrodes may also include an electronic conductor that enables the electronic conduction.

In order to manufacture relatively thin batteries, the electrodes can be printed or coated onto the current collector. These techniques afford micrometric electrodes. With this respect, adding a binder to the electrode composition may improve its coating/printing abilities onto the current collector. It may improve the homogeneity of the active material as well. US2003219648 describes such a printed battery cell.

As for the electrode separator, prior art batteries generally comprise a layer made of a polyolefin or a copolymer of fluorinated monomers EP1621573 discloses a fluorinated copolymer comprising one fluorinated monomer one acrylic acid derivative used for battery separator. While technological innovations have led to the size reduction of electronic devices, there still subsists a need to improve the energy density of lithium ion batteries. Indeed, optimizing the thickness of the electrodes, separator, and current collector while maintaining the efficiency and capacity of the Li ion batteries remains one of the main challenges this field faces.

The Applicant has now developed a process for making lithium ion batteries comprising a thin fluoropolymer film as electrode separator.

### SUMMARY OF THE INVENTION

The present invention relates to a process for making a lithium ion battery in which the electrode separator comprises a copolymer of a fluorinated and an acrylic acid derivative monomers.

The Applicant has discovered that, by means of this novel process, lithium ion batteries are obtained, wherein the electrode separator comprises a copolymer containing a fluorinated monomer and a hydrophilic monomer, said lithium ion batteries exhibiting an improved energy density as compared to conventional lithium ion batteries comprising either a polyolefin separator or a polymer exclusively made of fluorinated monomers. Their behavior during charge/discharge cycles is also improved.

More specifically, the present invention relates to a process for making a Li-ion battery according to claim 1 comprising:
- a positive electrode;
- an electrode separator;
- a negative electrode
said process comprising:
- the preparation of a positive electrode from an ink comprising at least one active electrode material, and at least one binder;
- the preparation of an electrode separator from an ink comprising at least one fluorinated copolymer;
- the preparation of a negative electrode from an ink comprising at least one active electrode material, and at least one binder,
wherein said fluorinated copolymer comprises:
- from 99.99 to 90 mol % of at least one fluorinated monomer, preferably from 99.9 to 95 mol% and even more preferably between 99.5 and 97.5 mol%; and
- from 0.01 to 10 mol % of at least one acrylic acid derivative monomer of formulae CR¹R²=CR³-C(=O)-O-R⁴, preferably from 0.1 to 5 mol% and even more preferably between 0.5 and 2.5 mol%, wherein each of R¹, R², R³, equal or different from each other, is independently a hydrogen atom or a C1-C3 hydrocarbon group, and R⁴ is a hydrogen or a C1-C5 hydrocarbon moiety comprising at least one hydroxyl group.

In the remaining of the description, the term "the fluorinated copolymer" refers to the fluorinated copolymer as defined above.

According to a particular embodiment, the separator is made of more than one polymeric film at least one of which being a fluorinated polymeric film obtained from the fluorinated copolymer as defined above. The electrode separator may contain more than one copolymer, it can also be a mixture of more than one fluorinated copolymer as described above.

Although, the electrode separator may comprise additional polymers; it is preferably constituted of said fluorinated copolymer or fluorinated polymeric film.

The fluorinated copolymer may be obtained by polymerizing in an aqueous medium in the presence of a radical initiator at least one fluorinated monomer and at least one acrylic acid derivative monomer. This reaction may be carried out in a reaction vessel according to the following steps:
- continuously feeding an aqueous solution comprising the acrylic acid derivative monomer(s); and
- maintaining in said reactor vessel an appropriate amount of fluorinated monomer(s) which may be gases at normal temperature and pressure.

As a consequence, the fluorinated copolymer may comprise randomly distributed fluorinated monomers and acrylic acid derivative monomers as described in document WO 2008/129041 for instance. Random distribution of the monomers affords blocky-type structures. The resulting uneven distribution affects the properties of the copolymer.

The fraction of randomly distributed units of acrylic acid derivatives is of preferably at least 40%, more preferably at least 50%, even more preferably of at least 60%, most preferably of at least 70 %.

As described in document WO 2008/129041, said fraction corresponds to the average number of acrylic acid derivative monomer sequence per 100 identical fluorinated monomers. It can be determined by ¹⁹F NMR spectroscopy.

The fluorinated copolymer comprises preferably at least 0.01 % moles, more preferably at least 0.1 % moles even more preferably at most 0.5% moles of recurring units derived from said acrylic acid derivative monomers.

The fluorinated copolymer comprises preferably at most 10 % moles, more preferably at most 5 % moles even more preferably at most 2.5 % moles of recurring units derived from said acrylic acid derivative monomers.

The acrylic acid derivative monomer of formulae CR¹R²=CR³-C(=O)-O-R⁴ is preferably hydrophilic. Non limitative examples of acrylic acid derivative monomers include the hydrophilic monomers selected from the group consisting of acrylic acid, methacrylic acid, hydroxyethyl (meth)acrylate, hydroxypropyl(meth)acrylate; hydroxyethylhexyl (meth)acrylate; and mixtures thereof.

The acrylic acid derivative monomer is more preferably selected from the group consisting of hydroxyethylacrylate (HEA); 2-hydroxypropyl acrylate (HPA); acrylic acid (AA); and mixtures thereof.

Regarding the fluorinated monomer, it is preferably selected from the group consisting of vinylidene fluoride (CF₂=CF₂); hexafluoropropylene (CF₂=CF-CF₃); chlorotrifluoroethylene (CClF=CF₂); trifluoroethylene (CF₂=CHF); the like, and mixtures thereof. It is preferably vinylidene fluoride (CF₂=CF₂); hexafluoropropylene (CF₂=CF-CF₃); and mixtures thereof.

Preferably the fluorinated copolymer contains at least 70% of recurring units of vinylidene fluoride (CF₂=CF₂).

The positive and negative electrodes of the lithium ion battery are preferably prepared from an electrode ink comprising:
- at least one active material of electrode;
- at least one binder;
- optionally at least one electronic conductor.

It can be an aqueous or organic ink.

Regarding the positive electrode active material of a lithium ion battery, it may comprise a composite metal chalcogenide of formulae LiMY₂, wherein M is at least one transition metal such as Co, Ni, Fe, Mn, Cr, Al and V; and Y is a chalcogen, such as O or S.

The positive electrode material is preferably a lithium-based composite metal oxide of formulae LiMO₂, wherein M is the same as above.

Preferred examples thereof may include: LiCoO₂, LiNiO₂, LiNiₓCo₁₋ₓO₂ (0 < x < 1), LiNi_{0.8}Co_{0.15}Al_{0.05}O₂, and spinel-structured LiMn₂O₄.

On the other hand, the negative electrode active material of a lithium battery preferably comprises a carbonaceous material, such as graphite, activated carbon or a carbonaceous material obtained by carbonization of phenolic resin, pitch.

As already said, electrode inks may comprise at least one electronic conductor. This kind of material is added in order to improve the poor electronic conductivity of active materials such as LiCoO₂ or LiFePO₄ for instance.

Said electronic conductor can be selected from the group consisting of carbonaceous materials, such as carbon black, graphite fine powder and fiber, and fine powder and fiber of metals, such as nickel and aluminum.

For both electrodes, the binder is preferably at least one fluorinated copolymer as described above.

According to a preferred embodiment, the binder(s) and the separator of the Li ion battery comprise the same fluorinated copolymer. The same fluorinated copolymer is therefore advantageously comprised in the electrode(s) and the separator.

In other words, at least one of the ink used for the preparation of the positive electrode and/or of the ink used for the preparation of the negative electrode comprises at least one binder, wherein said binder is a fluorinated copolymer comprising:
- from 99.99 to 90 mol % of at least one fluorinated monomer, preferably from 99.9 to 95 mol% and even more preferably between 99.5 and 97.5 mol%;
- from 0.01 to 10 mol % of acrylic acid derivatives of formulae CR¹R²=CR³-C(=O)-O-R⁴, preferably from 0.1 to 5 mol% and even more preferably between 0.5 and 2.5 mol%, wherein each of R¹, R², R³, equal or different from each other, is independently a hydrogen atom or a C1-C3 hydrocarbon group, and R⁴ is a hydrogen or a C1-C5 hydrocarbon moiety comprising at least one hydroxyl group.

According to a particular embodiment, the binder of both the ink used for the preparation of the positive electrode and the ink used for the preparation of the negative electrode is a fluorinated copolymer as defined above.

Both electrode inks can comprise the same binder(s).

According a particular embodiment, the fluorinated copolymer of the ink for manufacturing the electrode separator is the same as the fluorinated copolymer of the binder of the ink used for the preparation of the positive electrode and/or the ink used for the preparation of the negative electrode. It is preferably the same fluorinated copolymer for both inks.

Other binders include commonly used mixtures such as carboxymethylcellulose (CMC) and a latex (SBR, styrene butadiene rubber, or NBR, Acrylonitrile Butadiene Copolymer).

The Li-ion battery preferably comprises at least one electrode comprising a binder which is the fluorinated copolymer of the electrode separator.

The electrodes can be coated of printed onto their respective current collector, according to techniques which are common general knowledge in the art.

However, according to a preferred embodiment of the invention, the electrodes are both printed onto a current collector.

The current collector can be made of a material that can be selected in the group consisting of aluminum, copper, ...

The skilled man will be able to combine the appropriate current collector and electrode materials.

The electrode separator can be printed, coated, extruded, or casted according to prior art techniques. For instance, it can be coated onto a glass substrate. The printing techniques include serigraphy printing, helio printing, flexography printing, photogravure (heliogravure), ink jet printing.

The electrode separator can be printed or coated onto either the positive or the negative electrode. It can also be coated or printed onto both electrodes. According to another particular embodiment, it can be a self-supported polymeric film that is placed in between the electrodes.

According to a preferred embodiment, the electrode separator is printed onto one electrode or onto both electrodes. It is preferably printed onto the negative electrode.

The thickness of the electrode separator rangers from 1 micrometers to 20 micrometers, more preferably between 2 and 13 micrometers, even more preferably between 2 and 8 micrometers.

The electrode separator has a porosity of less than 30%, more preferably less than 20%, and even more preferably less than 10 %. The porosity relates to the volume of pores per unit of volume of the electrode separator.

According to this process, the positive and/or negative electrode can be printed or coated onto a current collector.

As already said, the electrode separator can be exclusively made of a polymeric film, which can be printed or coated onto one electrode or both the positive and negative electrodes.

According to a particular embodiment of the invention, the electrode separator is a self-supported polymeric film that is first prepared by coating a composition comprising the fluorinated copolymer onto a substrate (glass substrate for instance), and drying the resulting polymeric film. Said film is then placed in between the electrodes.

The invention and its advantages will become more apparent to one skilled in the art from the following figures and examples.

### BRIEF DESCRIPTION OF THE DRAWINGS

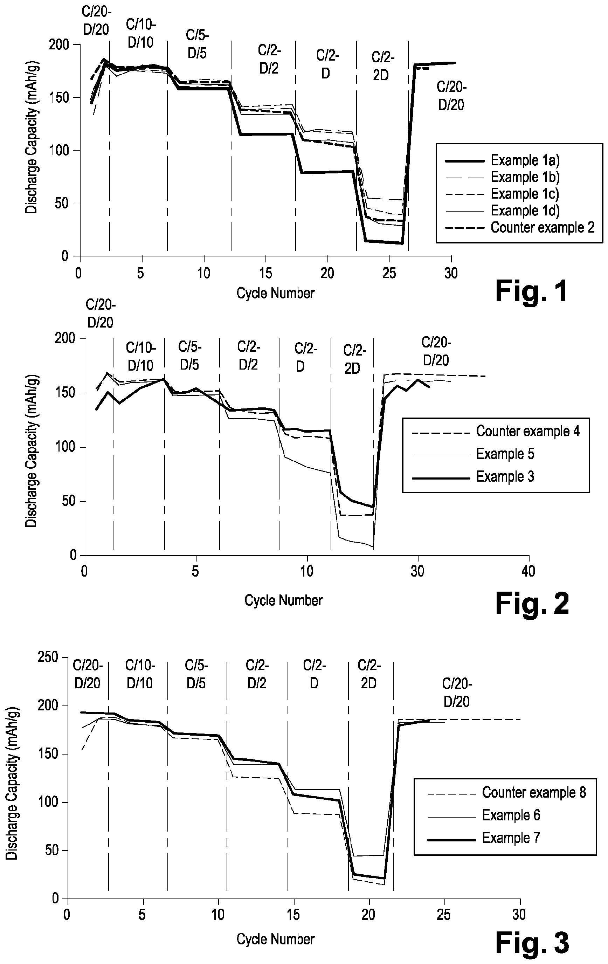

Figure 1 is a graph of the discharge capacity of batteries according to both the invention and the prior art and comprising printed electrodes, as a function of the number of charge/discharge cycles.
Figure 2 is a graph of the discharge capacity of batteries according to both the invention and the prior art and comprising coated electrodes, as a function of the number of charge/discharge cycles.
Figure 3 is a graph of the discharge capacity of batteries according to both the invention and the prior art and comprising printed electrodes, as a function of the number of charge/discharge cycles.

### DETAILED DESCRIPTION OF EMBODIMENTS OF THE INVENTION

Examples of table 1 concern batteries comprising a separator made of a fluorinated polymer (examples 1-3, 6, 7), and batteries comprising a commercial separator (counter examples 4, 5 and 8).

The density of the self-supported films of the example 3 (VF2-MA) and of the example 6 of VF2-HFP-MA have been measured according to the ASTM D792-00, obtaining respectively a porosity of 3.8% and 9%, defined as (voids volume/total volume of the sample)*100.

**TABLE 1: BATTERIES ACCORDING TO THE INVENTION VS CONVENTIONAL BATTERIES**

| **EXAMPLE** | **CATHODE^{(a)(c)}** | **ANODE** | **ELECTRODE SEPARATOR** |
|---|---|---|---|
| **Examples 1a)-1d) (****Figure 1****)** | Ink:^{(c)} | Ink:^{(d)} | Composition: |
| | - 96% NCA | - 96% graphite | - VF2-MA |
| | - 2% VF2-MA | - 2% latex | |
| | - 2%EC | - 2%CMC | |
| | | | |
| | Printed onto an aluminum current collector | Printed onto a copper current collector | Printed onto the anode ^{(e)} |
| | | | |
| | | | Thickness^{(h)} = 3; 4; 5; 6 microns |
| **Counter example 2 (****Figure 1****)** | Ink:^{(c)} | Ink:^{(d)} | Composition: |
| | - 96% NCA | - 96% graphite | - Polyethylene^{(b)} |
| | - 2% VF2-MA | - 2% latex | |
| | - 2%EC | - 2%CMC | |
| | | | |
| | Printed onto an aluminum current collector | Printed onto a copper current collector | Self-supported |
| | | | |
| | | | Thickness = 25microns |
| **Example 3 (****Figure 2****)** | Ink:^{(c)} | Ink:^{(d)} | Composition: |
| | - 96% NCA | - 96% graphite | - VF2-MA |
| | - 2% VF2-MA | - 2% latex | |
| | - 2%EC | - 2%CMC | |
| | | | |
| | Coated onto an aluminum current collector | Coated onto a copper current collector | Coated onto a glass substrate ^{(e)} |
| | | | Self-supported |
| | | | |
| | | | Thickness = 5 microns |
| **Counter example 4 (****Figure 2****)** | Ink:^{(c)} | Ink:^{(d)} | Composition: |
| | - 96% NCA | - 96% graphite | - VF2-HFP |
| | - 2% VF2-MA | - 2% latex | |
| | - 2%EC | - 2%CMC | |
| | | | |
| | Coated onto an aluminum current collector | Coated onto a copper current collector | Coated onto a glass substrate ^{(f)} |
| | | | Self-supported |
| | | | |
| | | | Thickness = 5 microns |
| **Counter example 5 (****Figure 2****)** | Ink:^{(c)} | Ink:^{(d)} | Composition: |
| | - 96% NCA | - 96% graphite | - Polyethylene ^{(b)} |
| | - 2% VF2-MA | - 2% latex | |
| | - 2%EC | - 2%CMC | |
| | | | |
| | Coated onto an aluminum current collector | Coated onto a copper current collector | Self-supported |
| | | | Thickness 25 microns |
| **Example 6 (****Figure 3****)** | Ink:^{(c)} | Ink:^{(c)} | Composition: |
| | - 96% NCA | - 96% graphite | - VF2-HFP-MA |
| | - 2% VF2-MA | - 4% VF2-MA | |
| | - 2%EC | | |
| | | | |
| | Printed onto an aluminum current collector | Printed onto a copper current collector | Coated onto a glass substrate ^{(e)} |
| | | | Self-supported |
| | | | Thickness = 6 microns |
| **Example 7 (****Figure 3****)** | Ink:^{(c)} | Ink:^{(c)} | Composition: |
| | - 96% NCA | - 96% graphite | - VF2-HFP-MA |
| | - 2% VF2-MA | - 4% VF2-MA | |
| | - 2%EC | | |
| | | | |
| | Printed onto an aluminum current collector | Printed onto a copper current collector | Printed onto the anode ^{(g)} |
| | | | Thickness = 9 microns |
| **Counter example 8 (****Figure 3****)** | Ink:^{(c)} | Ink:^{(d)} | Composition: |
| | - 96% NCA | - 96% graphite | - Polyethylene ^{(b)} |
| | - 2% VF2-MA | - 2% latex | |
| | - 2%EC | - 2%CMC | |
| | | | |
| | Printed onto an aluminum current collector | Printed onto a copper current collector | Self-supported |
| | | | Thickness 25 microns |

| | | | |
|---|---|---|---|
| ^{(a)} weight percentages as compared to the dry weight of the ink ^{(b)} Polyethylene = Celgard®2400 purchased from Celgard ^{(c)} ink prepared in organic solvent (NMP = N-methylpyrrolidone) ^{(d)} ink prepared in aqueous solution ^{(e)} separator obtained from a 8.7 wt% solution in THF/DMF (80/20 by weight) ^{(f)} separator obtained from a 22 wt% solution in THF/DMF (80/20 by weight) ^{(g)} separator obtained from a 5 wt% solution in MEK (butan-2-one) ^{(h)} The respective thickness of the separator according to examples 1a)-d) is 3; 4; 5; 6 microns - CMC = carboxymethylcellulose - NCA = LiNi _{0.8} Co _{0.15} Al _{0.05} O₂ - VF2-MA = copolymer composition :99 mol% vinylidene fluoride (CF₂=CF₂), and 1 mol% acrylic acid (CH₂=CH-C(=O)-OH) - VF2-HFP = copolymer composition: 97.7 mol% vinylidene fluoride (CF₂=CF₂), and 2.3 mol% hexafluoropropene (CF₂=CF-CF₃) - VF2-HFP-MA = copolymer composition: 96.7 mol% vinylidene fluoride (CF₂=CF₂), 2.3 mol% hexafluoropropene (CF₂=CF-CF₃), and 1 mol% acrylic acid (CH₂=CH-C(=O)-OH) - NBR latex = Acrylonitrile Butadiene Copolymer (NBR) purchased from Polymer Latex (solution at 41 %) - EC = electronic conductor (Carbon Super P (SuperC65) from Showa Denko) | | | |

Batteries were prepared according to the compositions/inks of table 1, and tested at different charge and discharge rates, for a current load ranging from 3.0 to 4.25 volts. In the batteries of examples 2, 5 and 8, the electrode separator is placed in between the two electrodes.

In the batteries of examples 3, 4 and 6, the electrode separator is dried and placed in between the two electrodes.

Batteries according to examples 1-2 are thin batteries packed into a soft packaging. They have been tested according to the following cycles:
C/20-D/20: 2 cycles; C/10-D/10: 5 cycles; C/5-D/5: 5 cycles; C/2-D: 4 cycles; C/2-2D; C/20-D/20 several cycles.

Batteries according to examples 3-5 are button cells. They have been tested according to the following cycles:
C/20-D/20: 2 cycles; C/10-D/10: 5 cycles; C/5-D/5: 5 cycles; C/2-D: 4 cycles; C/2-2D; C/20-D/20: several cycles.

Batteries according to examples 6-8 are flat batteries packed into a soft packaging. They have been tested according to the following cycles:
C/20-D/20: 3 cycles; C/10-D/10: 4 cycles; C/5-D/5: 4 cycles; C/2-D: 4 cycles; C/2-2D: 3 cycles; C/20-D/20 several cycles.

A C/20 charge cycle corresponds to a steady current for a 20 hour period. The amount of current is equal to the capacity C of the battery divided by 20. A discharge cycle of D/5 corresponds to a discharge lasting 5 hours.

All of these examples show that, according to the process of the invention, the lithium ion batteries so obtained exhibit improved properties as compared to conventional batteries having a polyolefin separator or a fully fluorinated separator.

It is also shown that similar properties are obtained regardless of whether the separator is self-supported or coated onto a current collector.

## Claims

1. A process for making a Li-ion battery comprising:
- a positive electrode;
- an electrode separator;
- a negative electrode
said process comprising:
- the preparation of a positive electrode from an ink comprising at least one active electrode material, and at least one binder;
- the preparation of an electrode separator from an ink comprising at least one fluorinated copolymer;
- the preparation of a negative electrode from an ink comprising at least one active electrode material, and at least one binder; **characterized in that** said fluorinated copolymer comprises:
- from 99.99 to 90 mol % of at least one fluorinated monomer;
- from 0.01 to 10 mol % of at least one acrylic acid derivative of formulae CR¹R²=CR³-C(=O)-O-R⁴ wherein each of R¹, R², R³, equal or different from each other, is independently a hydrogen atom or a C1-C3 hydrocarbon group, and R⁴ is a hydrogen or a C1-C5 hydrocarbon moiety comprising at least one hydroxyl group;
and wherein the electrode separator has a porosity of less than 30% and a thickness of between 1 and 20 micrometers.

2. The process for making a Li-ion battery according to claim 1, ***characterized* in that** the positive and/or negative electrode is printed or coated onto a current collector.

3. The process for making a Li-ion battery according to claim 1 or 2, ***characterized* in that** the electrode separator is printed onto the positive and/or negative electrode.

4. The process for making a Li-ion battery according to any of claims 1 to 3, ***characterized* in that** the electrode separator is a self-supported polymeric film that is first coated onto a substrate and then placed in between the two electrodes.

5. The process for making a Li-ion battery according to any of claims 1 to 4, ***characterized* in that** the fluorinated monomer is selected from the group consisting of vinylidene fluoride; hexafluoropropylene; chlorotrifluoroethylene; trifluoroethylene, and mixtures thereof.

6. The process for making a Li-ion battery according to any of claims 1 to 5, ***characterized* in that** the acrylic acid derivative monomer is selected from the group consisting of acrylic acid, methacrylic acid, hydroxyethyl (meth)acrylate, hydroxypropyl(meth)acrylate; hydroxyethylhexyl (meth)acrylate, and mixtures thereof.

7. The process for making a Li-ion battery according to any of claims 1 to 6, ***characterized* in that** at least one of the ink used for the preparation of the positive electrode and/or of the ink used for the preparation of the negative electrode comprises at least one binder, wherein said binder is a fluorinated copolymer comprising:
- from 99.99 to 90 mol % of at least one fluorinated monomer;
- from 0.01 to 10 mol % of acrylic acid derivatives of formulae CR¹R²=CR³-C(=O)-O-R⁴ wherein each of R¹, R², R³, equal or different from each other, is independently a hydrogen atom or a C1-C3 hydrocarbon group, and R⁴ is a hydrogen or a C1-C5 hydrocarbon moiety comprising at least one hydroxyl group.

8. The process for making a Li-ion battery according to claim 7, ***characterized* in that** the binder of both the ink used for the preparation of the positive electrode and the ink used for the preparation of the negative electrode is a copolymer as defined in claim 7.

9. The process for making a Li-ion battery according to claim 8, ***characterized* in that** the fluorinated copolymer of the ink for manufacturing the electrode separator is the same as the fluorinated copolymer of the binder of the ink used for the preparation of the positive electrode and/or the ink used for the preparation of the negative electrode.

10. The process for making a Li-ion battery according to any of claims 1 to 9, ***characterized* in that** the fluorinated copolymer comprises from 99.9 to 95 mol % of the at least one fluorinated monomer; and from 0.1 to 5 mol % of the at least one acrylic acid derivative monomer.

11. The process for making a Li-ion battery according to any of claims 1 to 10, ***characterized* in that** the fluorinated copolymer comprises from 99.5 to 97.5 mol % of the at least one fluorinated monomer; and from 0.5 to 2.5 mol % of the at least one acrylic acid derivative monomer.

## Patentansprüche

1. Verfahren zur Herstellung einer Li-Ion-Batterie, umfassend:
- eine positive Elektrode;
- einen Elektrodenabscheider;
- eine negative Elektrode,
wobei das genannte Verfahren umfasst:
- die Herstellung einer positiven Elektrode aus einer Tinte, die mindestens ein aktives Elektrodenmaterial und mindestens ein Bindemittel umfasst;
- die Herstellung eines Elektrodenabscheiders aus einer Tinte, die mindestens ein fluoriertes Copolymer umfasst;
- die Herstellung einer negativen Elektrode aus einer Tinte, die mindestens ein aktives Elektrodenmaterial und mindestens ein Bindemittel umfasst;
**Dadurch gekennzeichnet, dass** das fluorierte Copolymer umfasst:
- zwischen 99,99 und 90 Mol-% mindestens eines fluorierten Monomers;
- zwischen 0,01 bis 10 Mol-% mindestens eines Acrylsäurederivats der Formel CR¹R²=CR³-C(=O)-O-R⁴, wobei jedes R¹, R², R³ gleich oder verschieden voneinander, unabhängig ein Wasserstoffatom oder eine C1-C3-Kohlenwasserstoffgruppe ist und R⁴ ein Wasserstoff- oder ein C1-C5-Kohlenwasserstoffrest ist, der mindestens eine Hydroxylgruppe umfasst;
und wobei der Elektrodenabscheider eine Porosität von unter 30% und eine Dicke zwischen 1 und 20 Mikrometern hat.

2. Verfahren zur Herstellung einer Li-Ion-Batterie gemäß Anspruch 1, ***dadurch gekennzeichnet, dass*** die positive und/oder negative Elektrode auf einen Stromabnehmer gedruckt oder beschichtet ist.

3. Verfahren zur Herstellung einer Li-Ion-Batterie gemäß Anspruch 1 oder 2, ***dadurch gekennzeichnet, dass*** der Elektrodenabscheider auf die positive und/oder negative Elektrode gedruckt ist.

4. Verfahren zur Herstellung einer Li-Ion-Batterie gemäß den Ansprüchen 1 bis 3, ***dadurch gekennzeichnet, dass*** der Elektrodenabscheider eine selbsttragende Polymerfolie ist, die zuerst auf ein Substrat beschichtet wird und dann zwischen die beiden Elektroden gebracht wird.

5. Verfahren zur Herstellung einer Li-Ion-Batterie gemäß einem der Ansprüche 1 bis 4, ***dadurch gekennzeichnet, dass*** das fluorierte Monomer aus der Gruppe die aus Vinylidenfluorid; Hexafluoropropylen; Chlorotrifluoroethylen; Trifluoroethylen, und Mischungen aus diesen Stoffen besteht, ausgewählt wird.

6. Verfahren zur Herstellung einer Li-Ion-Batterie gemäß einem der Ansprüche 1 bis 5, ***dadurch gekennzeichnet, dass*** das Acrylsäurederivat-Monomer aus der Gruppe die aus Acrylsäure, Methacrylsäure, Hydroxyethyl (meth)acrylat, Hydroxypropyl(meth)acrylat; Hydroxyethylhexyl (meth)acrylat, und Mischungen aus diesen Stoffen besteht, ausgewählt wird.

7. Verfahren zur Herstellung einer Li-Ion-Batterie gemäß einem der Ansprüche 1 bis 6, ***dadurch gekennzeichnet, dass*** entweder die Tinte, die zur Herstellung der positiven Elektrode und/ oder die Tinte, die zur Herstellung der negativen Elektrode verwendet werden, mindestens ein Bindemittel enthalten, wobei dieses Bindemittel ein fluoriertes Copolymer ist, das umfasst:
- zwischen 99,99 bis 90 Mol-% mindestens eines fluoriertes Monomers;
- zwischen 0,01 und 10 Mol-% Acrylsäurederivaten, der Formel CR¹R²=CR³-C(=O)-O-R⁴, wobei jedes R¹, R², R³ gleich oder verschieden voneinander, unabhängig ein Wasserstoffatom oder eine C1-C3-Kohlenwasserstoffgruppe ist und R⁴ ein Wasserstoff- oder ein C1-C5- Kohlenwasserstoffrest ist, der mindestens eine Hydroxylgruppe umfasst;

8. Verfahren zur Herstellung einer Li-Ion-Batterie gemäß Anspruch 7, ***dadurch gekennzeichnet, dass*** das Bindemittel sowohl der Tinte, die für die Herstellung der positiven Elektrode verwendet wird, als auch die Tinte, die für die Herstellung der negativen Elektrode verwendet wird, ein Copolymer ist, wie definiert in Anspruch 7.

9. Verfahren zur Herstellung einer Li-Ion-Batterie gemäß Anspruch 8, ***dadurch gekennzeichnet, dass*** das fluorierte Copolymer der Tinte zur Herstellung des Elektrodenabscheiders dieselbe ist, wie das fluorinierte Copolymer des Bindemittels der Tinte, die für die Herstellung der positiven Elektrode verwendet wird und/ oder der Tinte, die für die Herstellung der negativen Elektrode verwendet wird.

10. Verfahren zur Herstellung einer Li-Ion-Batterie gemäß einem der Ansprüche 1 bis 9, ***dadurch gekennzeichnet, dass*** das fluorierte Copolymer zwischen 99,9 und 95 mol% des mindestens einen fluorierten Monomers und zwischen 0,1 und 5 mol% des mindestens einen Acrylsäurederivat - Monomers enthält.

11. Verfahren zur Herstellung einer Li-Ion-Batterie gemäß einem der Ansprüche 1 bis 10, ***dadurch gekennzeichnet, dass*** das fluorierte Copolymer zwischen 99,5 und 97,5 mol% des mindestens einen fluorierten Monomers und zwischen 0,5 und 2,5 mol% des mindestens einen Acrylsäurederivat-Monomers enthält.

## Revendications

1. Un procédé pour fabriquer une batterie Li-ion comprenant :
- une électrode positive ;
- un séparateur d'électrodes ;
- une électrode négative
ledit procédé comprenant :
- la préparation d'une électrode positive à partir d'une encre comprenant au moins un matériau actif d'électrode, et au moins un liant ;
- la préparation d'un séparateur d'électrodes à partir d'une encre comprenant au moins un copolymère fluoré ;
- la préparation d'une électrode négative à partir d'une encre comprenant au moins un matériau actif d'électrode, et au moins un liant ;
**caractérisé en ce que**
ledit copolymère fluoré comprend :
- de 99,99 à 90 mol % d'au moins un monomère fluoré ;
- de 0,01 à 10 mol % d'au moins un dérivé d'acide acrylique de formule CR¹R²=CR³-C(=O)-O-R⁴ dans laquelle chacun de R¹, R², R³, égaux ou différents l'un de l'autre, est indépendamment un atome d'hydrogène ou un groupe hydrocarboné C1-C3, et R⁴ est un hydrogène ou un groupe hydrocarboné C1-C5 comprenant au moins un groupe hydroxyle ;
et dans lequel le séparateur d'électrodes a une porosité de moins de 30 % et une épaisseur comprise entre 1 et 20 micromètres.

2. Le procédé pour fabriquer une batterie Li-ion selon la revendication 1, ***caractérisé* en ce que** l'électrode positive et/ou l'électrode négative est imprimée ou déposée sur un collecteur de courant.

3. Le procédé pour fabriquer une batterie Li-ion selon la revendication 1 ou 2, ***caractérisé* en ce que** le séparateur d'électrodes est imprimé sur l'électrode positive et/ou sur l'électrode négative.

4. Le procédé pour fabriquer une batterie Li-ion selon l'une des revendications 1 à 3, ***caractérisé* en ce que** le séparateur d'électrodes est un film polymérique auto-supporté qui est tout d'abord déposé sur un substrat et ensuite positionné entre les deux électrodes.

5. Le procédé pour fabriquer une batterie Li-ion selon l'une des revendications 1 à 4, ***caractérisé* en ce que** le monomère fluoré est sélectionné dans le groupe constitué du fluorure de vinylidène ; hexafluoropropylène ; chlorotrifluoroéthylène ; trifluoroéthylène , et leurs mélanges.

6. Le procédé pour fabriquer une batterie Li-ion selon l'une des revendications 1 à 5, ***caractérisé* en ce que** le monomère dérivé d'acide acrylique est sélectionné dans le groupe constitué de acide acrylique, acide méthacrylique, hydroxyéthyl (méth)acrylate, hydroxypropyl(méth)acrylate; hydroxyéthylhexyl (méth)acrylate, et leurs mélanges.

7. Le procédé pour fabriquer une batterie Li-ion selon l'une des revendications 1 à 6, ***caractérisé* en ce qu'**au moins une parmi l'encre utilisée pour la préparation de l'électrode positive et/ou l'encre utilisée pour la préparation de l'électrode négative comprend au moins un liant, dans laquelle ledit liant est un copolymère fluoré comprenant :
- de 99,99 à 90 mol % d'au moins un monomère fluoré ;
- de 0,01 à 10 mol % de décrivés d'acide acrylique de formule CR¹R²=CR³-C(=O)-O-R⁴ dans laquelle chacun de R¹, R², R³, égaux ou différents l'un de l'autre, est indépendamment un atome d'hydrogène ou un groupe hydrocarboné C1-C3, et R⁴ est un hydrogène ou un groupe hydrocarboné C1-C5 comprenant au moins un groupe hydroxyle.

8. Le procédé pour fabriquer une batterie Li-ion selon la revendication 7, ***caractérisé* en ce que** le liant de l'encre utilisée pour la préparation de l'électrode positive et le liant de l'encre utilisée pour la préparation de l'électrode négative est un copolymère comme défini dans la revendication 7.

9. Le procédé pour fabriquer une batterie Li-ion selon la revendication 8, ***caractérisé* en ce que** le copolymère fluoré de l'encre pour la fabrication du séparateur d'électrodes est le même que le copolymère fluoré du liant de l'encre utilisée pour la préparation de l'électrode positive et/ou de l'encre utilisée pour la préparation de l'électrode négative.

10. Le procédé pour fabriquer une batterie Li-ion selon l'une des revendications 1 à 9, ***caractérisé* en ce que** le copolymère fluoré comprend de 99,9 à 95 mol % d'au moins un monomère fluoré, et de 0,1 à 5 mol % d'au moins un monomère dérivé d'acide acrylique.

11. Le procédé pour fabriquer une batterie Li-ion selon l'une des revendications 1 à 10, ***caractérisé* en ce que** le copolymère fluoré comprend de 99,5 à 97,5 mol % d'au moins un monomère fluoré; et de 0,5 à 2,5 mol % d'au moins un monomère dérivé d'acide acrylique.
